# EUROPEAN PATENT SPECIFICATION

(11) **EP 1 620 925 B1**
(45) Date of publication and mention of the grant of the patent: **25.03.2015**
(21) Application number: 04730280.7
(22) Date of filing: 29.04.2004
(51) Int. Cl.: H01Q 21/00, H01Q 23/00, H01Q 1/24, H04W 88/08

(54) **ANTENNA ARRANGEMENT AND BASE TRANSCEIVER STATION**
ANTENNENANORDNUNG UND BASIS-SENDER/-EMPFÄNGERSTATION
AGENCEMENT D'ANTENNES ET STATION D'EMETTEUR-RECEPTEUR DE BASE

(30) Priority: 02.05.2003 FI 20030663; 28.05.2003 US 446144
(43) Date of publication of application: 01.02.2006
(73) Proprietor: Intellectual Ventures I LLC, Wilmington, DE 19808 (US)
(72) Inventor: PALLONEN, Jorma, FIN-FI-02400 Kirkkonummi (FI); SCHECK, Hans-Otto, FI-02360 Espoo (FI)
(74) Representative: Small, Gary James
(86) International application number: PCT/FI2004/000260
(87) International publication number: WO 2004/097987

(56) References cited:
- EP-A2- 1 124 281
- EP-A2- 1 143 554
- WO-A1-01/06801
- US-A1- 2003 040 336

## Description

### Field

The invention relates to an antenna arrangement in a base transceiver station of a telecommunication system and to a base transceiver station of a cellular telecommunication system.

### Background

It is well known that the location of antenna elements of a base transceiver station plays a crucial role in the quality of transmitted and received radio signals, and therefore has a strong impact on the capacity of the base transceiver station and the entire cellular telecommunication system.

It is customary to locate the antenna elements such that the coverage of the cell of the base transceiver station is as good as possible in the cell area. A good coverage may be obtained, for example, by locating the antenna elements in elevated sites by using masts dedicated for wireless communication or other high constructions, such as buildings, while other parts, such as radio frequency parts and base band parts, of the base transceiver station are located on the ground far from the antenna elements.

A physical distance between the antenna elements and the other parts of the base transceiver station involves a power distribution system for relaying electric signals between the antenna elements and the other parts of the base station. The power distribution system may comprise branches to a plurality of antenna elements if antenna groups are utilized. The power distribution system may comprise cables, such as co-axial cables, between the transceiver of the base station and the antenna elements and possibly mast amplifiers used as pre-amplifiers. The multi-antenna techniques usually require accurate relative signal characteristics, such as phase and amplitude, between the antenna signals of different antenna elements so that the desired radiation pattern provided by an antenna group can be achieved.

The electric characteristics of the power distribution system give rise to electric disturbance, such as loss and retardation, in the signals transmitted between the antenna elements and other parts of the base transceiver station. Especially, if multi-antenna techniques are utilized, the power distribution system may comprise branches with different electric characteristics, thus distorting the relative signal characteristics of the antenna signals, and reducing the quality of transmission and reception of the base transceiver station. The reduction in the quality of the transmission and reception further leads to lower in capacity of the base transceiver station and the entire cellular telecommunication system.

An example of a base station applying a distributed antenna system architecture is shown in EP1143554.

US 2003/0040336 discloses a tower top cellular communication device.

### Brief description of the invention

An object of the invention is to provide an improved antenna arrangement and a base transceiver station for reducing problems associated with the power distribution system between a base station and antenna elements of the base transceiver station.

The antenna arrangement and the base transceiver station according to the invention are defined in claims 1 and 12 respectively.

The antenna arrangement and the base transceiver station according to the invention provide several advantages. The digital form of low-frequency digital signal transmitted between the active and the base band parts of the base station together with the integrated structure of the transceiver and the antenna element enable a low-disturbance power distribution system to be located relatively far from the base band parts of the base transceiver station.

### List of the drawings

In the following, the invention will be described in greater detail with reference to preferred embodiments and the accompanying drawings, in which
Figure 1 shows an example of the structure of a cellular communication system;
Figure 2 shows an example of the structure of a base transceiver station according to the invention,
Figure 3 shows a first example of the structure of an active antenna according to the invention,
Figure 4 shows an example of the structure of a radio modem according to the invention,
Figure 5A shows a second example of the structure of an active antenna according to the invention, and
Figure 5B shows a third example of the structure of an active antenna according to the invention, and
Figure 6 shows an example of the structure of an antenna arrangement according to the invention.

### Description of embodiments

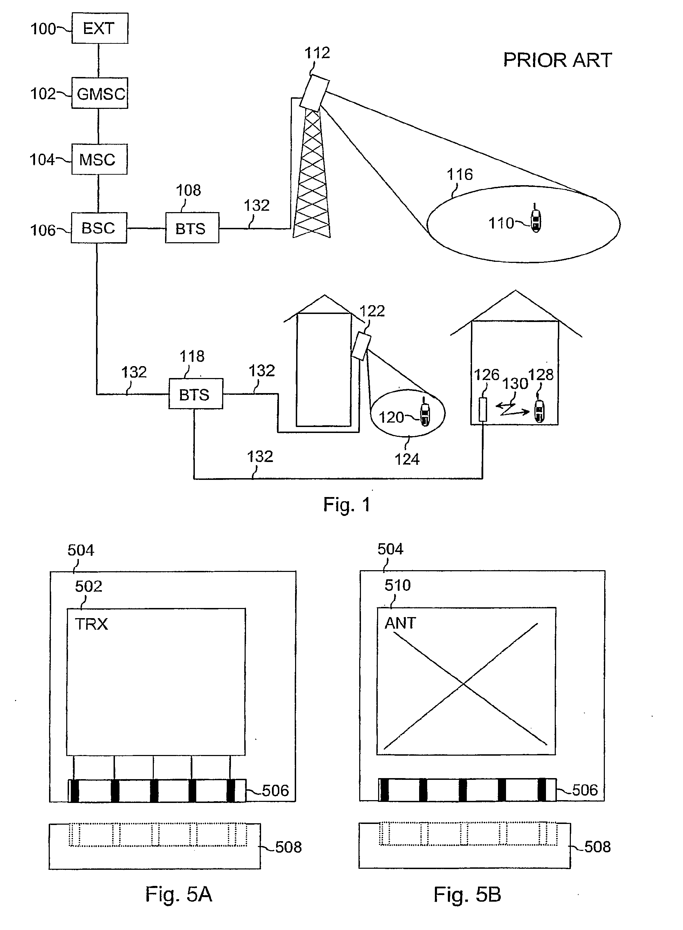

Figure 1 illustrates an example of a simplified structure of a telecommunication system to which the invention may be applied.

The cellular telecommunications system is based on, for example, a GSM (Global System for Mobile Communications) radio access technology or WCDMA (Wideband Code Division Multiple Access) technology. The structure and function of cellular telecommunications systems are known to a person skilled in the art, and only network elements relevant to the invention will be described.

In the example shown in Figure 1, the network elements are presented in terms of GSM terminology using circuit-switched network elements without restricting applications of the invention to the GSM system.

The cellular telecommunication system comprises a mobile switching centre (MSC) 104 enabling circuit-switched signalling in the cellular telecommunications system.

The cellular telecommunications system may also comprise a gateway mobile services switching centre 102 (GMSC). The GMSC attends to the circuit-switched connections between the core network comprising the MSC and the GMSC, and external networks (EXT) 100, such as a public land mobile network (PLMN) or a public switched telephone network (PSTN).

The MSC 104 controls a radio access network comprising at least one base station controller (BSC) 106 and a base transceiver station (BTS) 108, 118 controlled by the BSC 106. The base station controller 106 represents in general network elements, such as a radio network controller (RNC), which act as an interface between the core network and the radio access network. The base transceiver station 108, 118 represents network elements, such as node B, which implements the radio interface in the cellular telecommunication system. The invention is not, however, restricted in the presented structure of the cellular telecommunication system, but can be applied to any cellular telecommunication, such as a CDMA2000 system.

The telecommunication system further comprises user equipment 110, 120, 128 for providing a user with access to the cellular telecommunication system. The user equipment 110, 120, 128 may comprise conventional components, including wireless modems, processors with software, memory, a user interface, and a display. The structure and functions of the user equipment 110, 120, 128 are known to a person skilled in the art.

Figure 1 shows the structure of the coverage area of the exemplified cellular telecommunication system and implementation thereof. The base transceiver station 108 provides the user equipment 110 with a macro-cell 116, whose coverage area may range from hundreds of meters to several kilometres. In order to obtain such a large coverage area, the antenna element 112 may be located in an elevated location, such as the top of a mast. The macro-cell 116 may also represent an adaptive cell, which can dynamically be directed at the user equipment 110 according to the prevailing location and capacity requirement of the user equipment 110.

A smaller cell size may be employed in order to improve the coverage area provided by the macro-cell 116 or to form high capacity sites. Examples of such smaller cells include e.g. a micro-cell 124 and a pico-cell 130 are shown. A base transceiver station 118 may provide several micro- and/or picocells. The size of a micro-cell 124 may range from hundreds of meters to dozens of meters while the size of a pico-cell 130 may range from meters to centimetres.

The antenna element placement in the micro- and pico cell implementations may vary. Micro-cell antenna elements 122 may be located in buildings or a wall of a building while pico-cell antenna elements 126 are usually located in the proximity of the users in order to obtain direct visibility.

The cell implementations utilize a base transceiver station structure wherein the antenna element 112, 122, 126 is located far from the other parts of the base station 108, 118. Therefore, a connecting means 132 are required between the antenna element 112 and the other parts of the base transceiver station 108, 118.

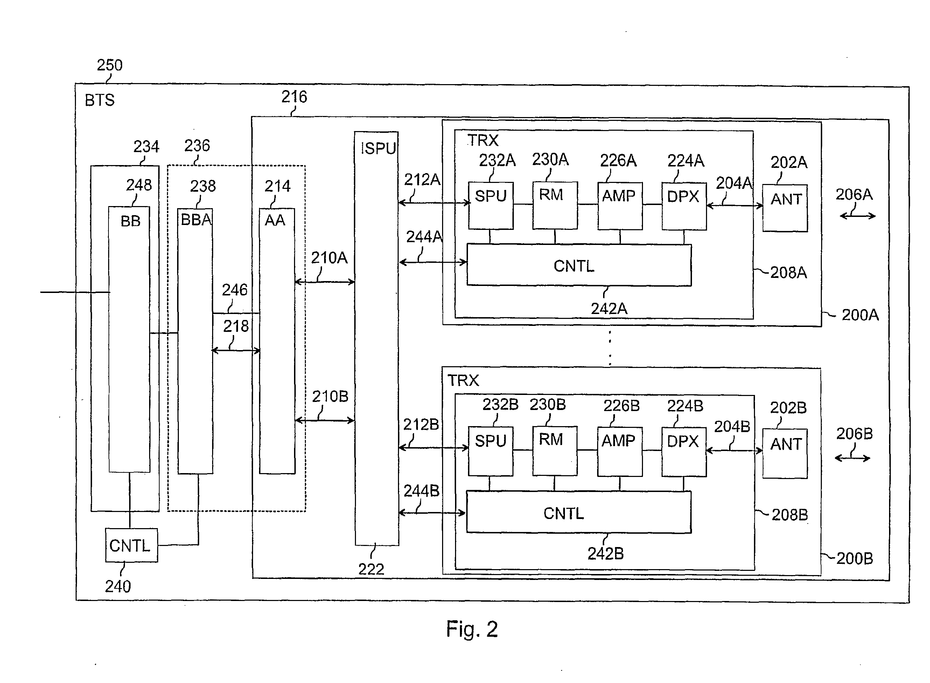

Figure 2 exemplifies embodiments of an antenna arrangement 216 according to the first aspect of the invention, and embodiments of a base transceiver station 250 according to the second aspect of the invention. The base transceiver station 250 and the antenna arrangement 216 are capable of transmitting and receiving radio signals. For the sake of simplicity, the transmitted signals and received signals are shown by using a single set of reference numerals.

The antenna arrangement 216 comprises at least one active antenna 200A, 200B. The active antenna 200A, 200B comprises an antenna element 202A, 202B, and a transceiver 208A, 208B coupled and integrated at least partially with the antenna element 202A, 202B.

In transmission, the antenna element 202A, 202B receives a radio frequency transmit signal 204A, 204B from the transceiver 208A, 208B and converts the radio frequency transmit signal 204A, 204B into a radio frequency electromagnetic field 206A, 206B, which may as such compose a radiation pattern or produce elementary components in an overall electromagnetic field produced in superposition with other antenna elements. The electromagnetic field 206A, 206B enables a downlink connection between user equipment 110, 120, 130 and a base transceiver station 108, 118, 250.

In reception, the antenna element 202A, 202B performs a spatial sampling of an electromagnetic field 206A, 206B produced by a radio signal source, such as user equipment 110, 120, 130, thus converting a portion of the radio frequency electromagnetic field 206A, 206B into a radio frequency receive signal 204A, 204B to be fed into the transceiver 208A, 208B. In reception, the electromagnetic field 206A, 206B enables an uplink connection between the user equipment 110, 120, 130 and a base transceiver station 108, 118, 250. The antenna element 202A, 202B may be a patch antenna or a dipole, for example. An oscillating frequency of the radio frequency electromagnetic field 206A, 206B may range, for example, from 850 MHz corresponding to GSM 850 system frequency to 1900 MHz corresponding to GSM1900 system frequency. The invention is not, however, restricted in the above frequencies but may be applied to any radio frequency utilized in a cellular telecommunication system.

In transmission, a low-frequency digital transmit signal 212A, 212B is inputted into the transceiver 208A, 208B. The low-frequency digital transmit signal 212A, 212B is converted into a radio frequency transmit signal 204A, 204B by the transceiver 208A, 208B.

In reception, the transceiver 208A, 208B converts the receive radio frequency receive signal 204A, 204B into a low-frequency digital output signal 212A, 212B, and outputs the low-frequency digital output signal 212A, 212B.

In an embodiment, the low-frequency digital signal 212A, 212B represents a signal similar to a base band signal used in base band parts in a base transceiver station. The format of the low-frequency digital signal 212A, 212B may, however, differ from that used in conventional base band parts.

In an embodiment, the antenna arrangement comprises an antenna adapter 214 connected to the at least one active antenna 200A, 200B for providing a digital link for the at least one active antenna 200A, 200B. The digital link is implemented by transmitting a digital link signal 218 between the antenna adapter 214 and other parts of the base transceiver station. In transmission, the antenna adapter 214 receives a digital link signal 218 and converts the digital link signal 218 into the low-frequency digital transmit signal 212A, 212B to be inputted into the transceiver 208A, 208B.

In reception, the antenna adapter 214 receives the low-frequency digital output signal 212A, 212B from the active antenna 200A, 200B and converts the low-frequency digital output signal 212A, 212B into the digital link signal 218.

A digital link provides several advantages over analogue links. The bit form of the information enabled by the digital link, for example, enables reliable and flexible information transfer, since losses in the digital link have a small effect on the information content transferred by the digital link.

In an embodiment, the digital link signal 218 is implemented by using optical radiation such that the information carried by the digital link signal 218 is coded digitally as intensity variation of the optical radiation.

In transmission, the antenna adapter 214 receives optical radiation carrying the digital link signal 218, detects the optical radiation with a light detector, and converts the optical radiation into an electric form. The electric form of the optical radiation may be amplified and filtered. The electric form of the optical radiation may be sampled, and the low-frequency digital transmit signal 212A, 212B is formed based on sampling.

In reception, the antenna adapter 214 may modulate the optical radiation such that the information content of the low-frequency digital output signal 212A, 212B is transferred into the digital link signal 218. The optical radiation may be produced by using known techniques, such as light emitting semiconductors.

The digital link signal 218 may be implemented by using optical channels based on optical properties, such as polarization or an optical wavelength, of the optical radiation used in implementing the digital link signal 218. The optical components and methods used in the implementation of the optical channels are known to a person skilled in the art.

The optical form of the digital link signal 218, for example, enables high information transfer capacity for the digital link signal 218.

In an embodiment, the digital link signal 218 has a predetermined frame structure, wherein each frame and/or portion of a frame has frame-specific information, such as payload data and control information.

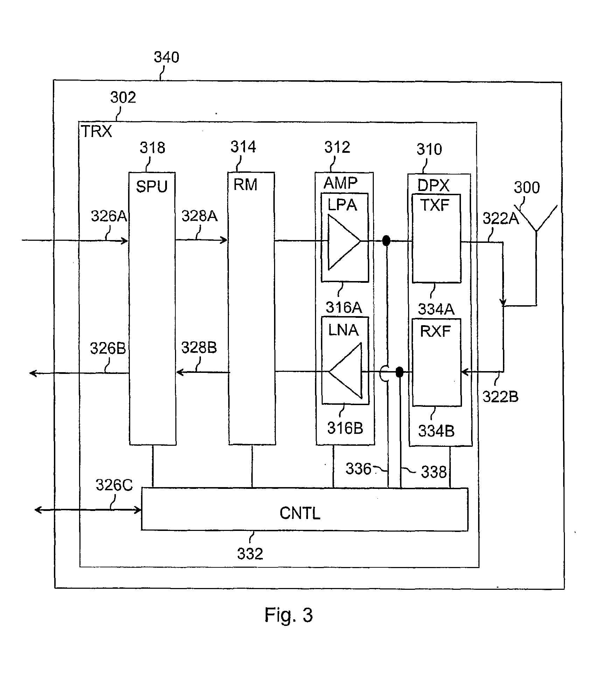

Figure 3 shows an example of the structure of an active antenna 340 according to the invention. Antenna elements 300 and a transceiver 302 are shown.

A low-frequency digital signal 326A represents a transmission portion of the low-frequency digital signal 212A, 212B shown in Figure 2. A low-frequency digital signal 326B represents a receive portion of the low-frequency digital signal 212A, 212B shown in Figure 2.

A radio frequency transmit signal 322A represents a transmit portion of the radio frequency signal 204A, 204B. A radio frequency receive signal 322B represents a receive portion of the radio frequency signal 204A, 204B.

In an embodiment, the transceiver 208A, 208B, 302 comprises a radio modem (RM) 230A, 230B, 314 for performing frequency conversion between the low-frequency digital signal 212A, 212B, 328A, 328B and the radio frequency signal 204A, 204B, 322A, 322B. The radio modem 230A, 230B, 314 may perform the conversion between the low-frequency digital signal 212A, 212B, 328A, 328B and the radio frequency signal 204A, 204B, 322A, 322B in one or more steps utilizing direct conversion or intermediate frequencies.

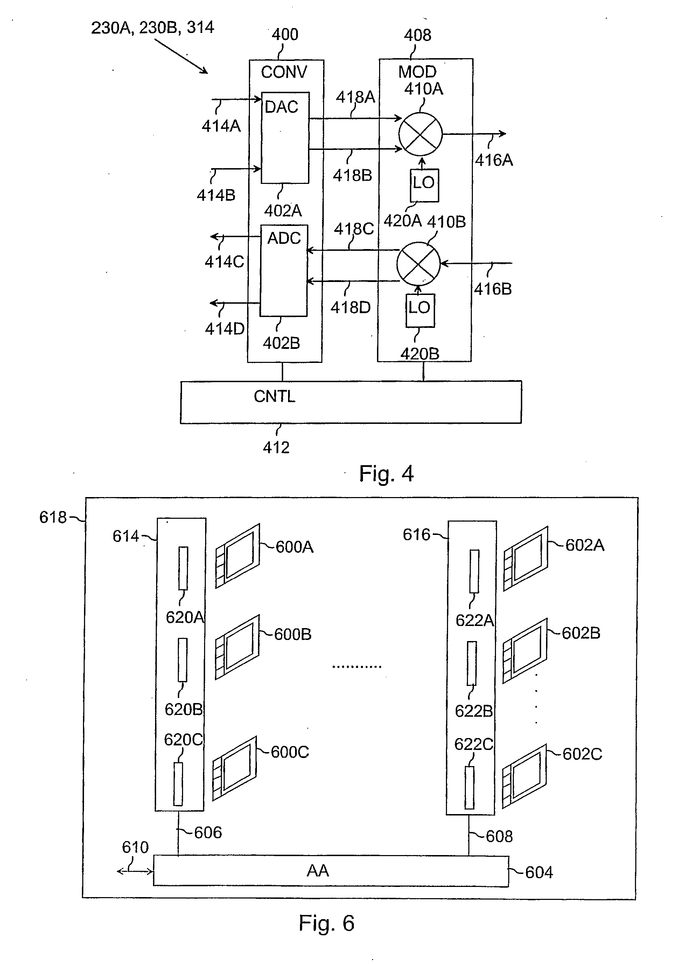

Figure 4 shows an example of a structure of a radio modem 230A, 230B, 314 employing direct conversion.

The radio modem 230A, 230B, 314 may comprise an analogue/digital converter unit 400 for performing conversion between a low-frequency digital signal 414A, 414B, 414C, 414D and a low-frequency electric analogue signal 418A, 418B, 418C, 418D.

The radio modem 230A, 230B, 314 may further comprise a modulator unit 408 for performing frequency conversion between the low-frequency electric analogue signal 418A, 418B, 418C, 418D and a radio frequency signal 416A, 416B.

In transmission, the radio modem 230A, 230B, 314 receives the low-frequency digital transmit signal 328A, 414A, 414B into an up-converter 410A and up-converts the low-frequency digital transmit signal 328A, 414A, 414B into the radio frequency transmit signal 322A, 416A. The low-frequency digital transmit signal 322A, 416A may be divided into a first digital transmit component 414A and a second digital transmit component 414B. The two digital transmit components 414A and 414B may contain signal characteristics, such as power and phase characteristics, of the radio frequency transmit signal 416A. The frequency of the up-converter 410A is controlled by a local oscillator 420A.

The analogue/digital converter unit may 400 comprise a digital-to-analogue converter 402A (ADC) for converting the low-frequency digital transmit signal 414A, 414B into the low-frequency electric analogue signal 418A, 418B. In an embodiment, the digital-to-analogue converter 402A includes separate converters for the first digital transmit component 414A and the second digital transmit component 414B, thus producing a first analogue transmit component 418A and a second analogue transmit component 418B.

In reception, the radio modem 230A, 230B, 314 receives the radio frequency receive signal 322B, 416B into a down-converter 410B of the modulator unit 408, and down-converts the radio frequency receive signal 322B, 416B into a low-frequency analogue electric receive signal 418C, 418D. Next, the low-frequency analogue electric receive signal 418C, 418D is fed into an analogue-to-digital converter 402B of the analogue/digital converter unit 400, which converts the low-frequency analogue electric receive signal 418C, 418D into the low-frequency digital signal 228B, 414C, 414D. The frequency of the up-converter 410B is controlled by a local oscillator 420B.

The first analogue receive component 418C and the second analogue receive component 418D are fed into analogue-to-digital converters 402B of the analogue/digital converter unit 400, which samples the two analogue receive components 418C, 418D, thus producing the low-frequency digital receive signals 226B 414C, 414D to be fed into the antenna adapter 214.

In an embodiment, the radio modem 230A, 230B, 314 is implemented using a printed board shared with the antenna unit 202A, 202B, 300. The radio modem 230A, 230B, 314 may further be implemented using an integrated circuit placed on the printed board. This implementation enables an integrated structure of the active antenna 200A, 200B, 340, which may employ teachings and electrical components in connection with user equipment implementations.

In an embodiment, the transceiver 208A, 208B, 302 comprises a filter unit (DPX) 224A, 224B, 310 connected to the antenna element 200 for limiting the frequency spectrum of the radio frequency signal 204A, 204B, 322A, 322B. The filter unit 224A, 224B, 310 may include a transmit filter 334A with a transmit pass band corresponding to the carrier frequencies used in the downlink direction. The filter unit 224A, 224B, 310 may further comprise a receive filter 334B with a receive pass band corresponding to the carrier frequencies used in the uplink direction. The transmit filter 334A and the receive filter 334B may be chosen and/or tuned such that the filter unit 224A, 224B, 310 composes a diplexer for separating the downlink and uplink frequency from each other.

In an embodiment, the filter unit 224A, 224B, 310 is connected to the radio modem 230A, 230B, 314. This implementation is preferable when a low power level is sufficient for transmission and possibly reception, for example, in pico-cell 130 formation.

In an embodiment, the filter unit 224A, 224B, 310 is implemented on a printed board shared with the antenna element 202A, 202B, 300, thus providing an integrated structure for the active antenna 200A, 200B, 340. The integrated structure enables utilizing filter techniques and components conventionally used in connection with user equipment implementations.

In an embodiment, the transceiver 208A, 208B, 302 comprises an amplifier unit (AMP) 226A, 226B, 312 for amplifying the radio frequency signal 204A, 204B, 322A, 322B. In an embodiment, the amplifier unit 226A, 226B, 312 is connected to the radio modem 230A, 230B, 314.

In an embodiment, the amplifier unit 226A, 226B, 312 comprises a transmit amplifier 316A, such as a linear power amplifier, for amplifying the transmit radio frequency signal 322A to be directed at the antenna element 300. The transmit amplifier 316A enables amplifying the radio frequency transmit signal 322A such that the strength of the electromagnetic field is at a desired level.

In an embodiment, the amplifier unit 226A, 226B, 312 comprises a receive amplifier 316B, such as a low noise amplifier, for amplifying the receive radio frequency signal 322B. The receive amplifier 316B enables the receive radio frequency signal 322B to be amplified such that after amplification, the power of the receive radio frequency signal 322B is at a level suitable for other parts of the transceiver 208A, 208B, 302, such as the radio modem 230A, 230B, 314.

In an embodiment, the amplifier unit 226A, 226B, 312 is implemented with an integrated circuit placed on a printed board in common with the antenna element 202A, 202B, 300, and possibly the radio modem 230A, 230B, 314, thus providing an integrated structure for the active antenna 200A, 200B, 340. The integrated structure enables amplifier techniques and electrical components, such as integrated amplifier circuits, to be utilized used in connection with user equipment implementations.

In an embodiment, the transceiver 208A, 208B, 302 comprises a signal processing unit (SPU) 232A, 232B, 318 for processing the low-frequency digital signal 212A, 212B, 326A, 326B.

In transmission, the signal processing unit 232A, 232B, 318 receives and performs processing on the low-frequency digital transmit signal 212A, 212B, 328B. The tasks the signal processing unit 232A, 232B, 318 performs on the low-frequency digital transmit signal 226A include: digital filtering, signal characteristics adjustment, power amplifier linearization, implementing signal shaping functions, digital pre-distortion. Some of the tasks may require feedback information from the antenna signal path comprising components between the signal processing unit 232A, 232B, 318 and the antenna element 202A, 202B, 300. Furthermore, the signal processing unit 232A, 232B, 318 may deal with tasks associated with operation and maintenance, such as alarms and control. The digital signal processor 232A, 232B, 318 outputs a processed low-frequency digital signal 328A, which is received, for example, by the radio modem 314.

In reception, the digital signal processing unit 232A, 232B, 318 receives a low-frequency digital receive signal 228B produced by, for example, the radio modem 314, and processes the low-frequency digital receive signal 228B. The tasks the digital signal processing unit 318 performs on the low-frequency digital receive signal 328B include: digital filtering, preliminary phase adjustment, operation and maintenance.

In an embodiment, the digital signal processing unit 232A, 232B, 318 is implemented using a printed board in common with the antenna element 202A, 202B, 300 and possibly the radio modem 230A, 230B, 314 the amplifier unit 226A, 226B, 312, and the filter unit 224A, 224B, 310. The signal processing unit 232A, 232B, 318 may include a digital signal processor, memory means and software suitable for the tasks listed. The signal processing unit 218 may be implemented using a digital computer chip placed on the printed circuit, thus providing an integrated structure for the active antenna 200A, 200B, 340. In an embodiment, the transceiver 208A, 208B, 302 supports a multi-carrier operation of a cellular telecommunication system. The multi-carrier operation includes capability of tuning the transceiver 208A, 208B, 302 over a wide range of radio frequencies while the frequency of the low-frequency digital signal 212A, 212B, 326A, 326B, 328A, 328B is fixed.

In an embodiment, the active antenna 200A, 200B, 340 comprises a control unit 242A, 242B, 332, 412 connected to the transceiver 208A, 208B, 302 for controlling the active antenna 200A, 200B, 340.

In an embodiment, the control unit 242A, 242B, 332 is connected to the antenna adapter 214 in order to transmit control information 244A, 244B, 326C between the control unit 242A, 242B, 332 and the antenna adapter 214. The control information may be associated with the following: beam forming, linearization of the radio frequency signals, pre-distorting of the radio frequency signals, time reference, power control, phase control, signal splitting, information on the status of a remote antenna 238.

The control unit 242A, 242B, 332 may be implemented with a digital computer with software and possibly means for measuring electric signals from the transceiver 208A, 208B, 302.

In an embodiment of the invention, the digital link signal 218 contains a control frame which includes control information for controlling the active antenna 200A, 200B, 340.

In an embodiment of the invention, the control unit 332 is configured to collect feedback information 336, 338 from the transceiver 302 and perform control tasks accordingly. The feedback information may 336, 338 be obtained by measuring electric signals from the transmit branch and/or receive branch of the transceiver 302. The control tasks requiring feedback information include, for example, digital pre-distortion and phase adjustment.

The control unit 242A, 242B may be connected to the antenna adapter 214 such that a dedicated digital control signal 326A, 326B is relayed between the transceiver 208A, 208B, 302 and the antenna adapter 214. It is also possible to multiplex the control information in the low-frequency digital signal 212A, 212B, 326A, 326B and extract the control information from the low-frequency digital signal 212A, 212B, 326A, 326B digitally.

In an embodiment, the antenna arrangement 216 comprises an interface signal processing unit (ISPU) 222 connected to at least one active antenna 200A, 200B and the antenna adapter 214 for processing signals 212A, 212B, 210A, 210B transmitted between the active antenna 200A, 200B and the antenna adapter 214. The interface signal processing unit 222 may separate different frames in the digital link signal 218 and possibly code the frames into suitable format for the transceiver 208A, 208B. The separation includes, for example, separating the payload data and control data from the bit stream, and routing the different types of data into suitable connectors of the transceiver 208A, 208B. Furthermore, the interface signal processing unit 222 may combine data of different optical channels and/or direct the data to different optical channels. The combining includes forming the bit stream from the low-frequency digital receive signal 212A, 212B, 326B and possibly from control signal signals such that the digital link signal 218 to be transmitted from the antenna adapter 214 has a predetermined frame structure.

Furthermore, the tasks the interface signal processing unit 222 performs in transmission include:
- calculating or watching, from a look up table, phase and power setting values for each antenna element 202A, 202B, 300 according to a desired radiation pattern
- setting the power level for each antenna element 202A, 202B, 300 directly or distributing power weight information to each signal processing unit 232A, 232B, 318
- distributing phase setting data to each signal processing unit 232A, 232B, 318
- distributing operation and maintenance commands to active antennas 200A, 200B, 340.

The tasks the interface signal processing unit 222 performs in reception include:
- reducing n data streams coming from the individual active antennas 200A, 200B, 300 into one common data stream
- phase tracking
- performing noise and interference cancellation using e.g. correlation or other suitable algorithms on the several data streams coming from the individual active antennas 200A, 200B, 340
- operation and maintenance command distribution.

The interference signal processing unit 222 may comprise a digital signal processor with software. In a broad interpretation, the interface signal processing unit 222 may comprise an application specific integrated circuit (ASIC) designed for the dedicated tasks of the interface signal processing unit 222. Therefore, reducing the n data streams into one common data stream, for example, may not require actual signal processing power but just adjusting the phases of incoming data streams so that they emulate the desired phase component of the illumination function provided by the antenna arrangement 216 and setting the antenna weights for summing so that also the power component of the mentioned illumination function is correct. In an embodiment, the interface signal processing unit 222 performs tasks aimed at increasing the sensitivity of reception. This role of the interface signal processing unit 222 reduces the need for costly hardware of the active antennas 200A, 200B, 340. In an embodiment, the digital link signal 218 includes signal characteristics, such as power information and phase information, of the radio frequency signal 222A, 222B.

In an embodiment, at least one active antenna 200A, 200B is configured to support at least two radio systems, such as GSM900, GSM850, GSM1800, GSM1900, WCDMA, and CDMA2000. The transceiver 208A, 208B, 302 may include parallel radio system-specific components, such as radio modems 230A, 230B, 312 and software. However, some components, such as antenna element 202A, 202B, 300, may be shared.

Figures 5A and 5B exemplify the structure of an active antenna 200A, 200B, 340, showing a transceiver 502 and an antenna element 510.

In an embodiment of the invention, an antenna element 510 and a transceiver 502 are integrated into a common electromechanical structure 504. The electromechanical structure 504 may be a printed board or an integrated circuit. The electromechanical structure 504 may comprise internal wiring for interconnecting the components, such as integrated circuits and antenna elements 510.

In an embodiment of the invention, the antenna element 510 and the transceiver 502 are situated in opposite sides of the electromechanical structure 504. This configuration enables a compact structure for the active antenna 200A, 200B, 340.

In an embodiment, the electromechanical structure 504 comprises a parallel bus 506 connected to the transceiver 502 for interconnecting the electromechanical structure 504 with an external parallel bus 508. The parallel bus 506 may comprise adjusting means such that the parallel bus 506 may be placed at a predetermined accuracy in the external parallel bus 508. The predefined accuracy is required when the active antenna 200A, 200B, 340 is used in beam forming, for example. The adjusting means may also enable instant installation and de-installation of the active antenna 200A, 200B, 340. The external parallel bus may also supply operating power for the active antenna 200A, 200B, 340.

Figure 6 shows an example of a structure of an active antenna arrangement according to the invention.

The active antenna arrangement comprises active antennas 600A, 600B, 600C, 602A, 602B, 602B, an antenna adapter 604 and a body 618 of the active antenna arrangement. A digital link signal 610 corresponding to the digital link signal 218 shown in Figure 2 is also shown. Low-frequency digital signals 606, 608 corresponding to the low-frequency digital signals 212A, 212B are also shown.

In an embodiment of the invention, at least a portion of the plurality of the active antennas 600A, 600B, 600C, 602A, 602B, 602C is attached to a common electromechanical structure 614, 616. The structure of the active antennas 600A, 600B, 600C, 602A, 602B, 602C may be similar to that of the electromechanical structure 504 shown in Figures 5A and 5B. In the example of Figure 6, the column arrangement gives rise to macro-cell formation, whereas the matrix arrangement enables beam forming and/or pico-cell formation.

The electromechanical structure 614, 616 may be a printed board with slots 620A, 620B, 620C 622A, 622B, 622C for connecting to the active antennas 600A, 600B, 600C, 602A, 602B, 602C. The active antenna 600A, 600B, 600C, 602A, 602B, 602C may be pushed into the slot 620A, 620B, 620C 622A, 622B, 622C such that a connection between the antenna adapter 604 and the active antenna 600A, 600B, 600C, 602A, 602B, 602C is established.

The active antennas 600A, 600B, 600C, 602A, 602B, 602C may be placed in the antenna arrangement with predetermined physical characteristics which include, for example, location and polarization of the active antenna 600A, 600B, 600C, 602A, 602B, 602C relative to other active antennas 600A, 600B, 600C, 602A, 602B, 602C in the antenna arrangement.

According to the second aspect of the invention, the invention provides a base transceiver station 250 exemplified in Figure 2. The base transceiver station 250 comprises a local unit 234 connected to the network via for example, the base station controller 106. The local unit 234 comprises, for example, a base band unit 248 of the base transceiver station 250. The base band unit 248 comprises the conventional base band parts and may perform tasks, such as coding, spreading, power control, modulation, demodulation, channel equalizing, RAKE-reception, and other standard-related processing tasks. In an embodiment, the tasks requiring substantial calculation power are carried out in the base band unit 248.

The base transceiver station 250 further comprises a plurality of active antennas 200A, 200B, 340 according to the first aspect of the invention.

In an embodiment, the base transceiver station 250 further comprises an interface 236 connected to the local unit 234 and at least one active antenna 200A, 200B for providing a digital link between the local unit 234 and the at least one active antenna 200A, 200B.

The interface 236 comprises an antenna adapter 214 according to the first aspect of the invention. The interface 236 further comprises a base band adapter 238 connected to the local unit 234 for providing an interface for the local unit 234.

The base band adapter 238 performs conversion between a low-frequency digital signal, such as a base band signal, of the local unit 234 and the digital link signal 218 transmitted between the base band adapter 238 and the antenna adapter 214. The base band adapter 238 may be connected to the control unit 240 of the base transceiver station 250 in order to relay control information between the local unit 234 and the active antenna 200A, 200B by using the digital link.

In an embodiment, the interface 236 is configured to transmit signal characteristics of the radio frequency signal 204A, 204B between the local unit 234 and the at least one active antenna 200A, 200B.

In an embodiment, the interface 236 is configured to transmit control information between the local unit 234 and the at least one active antenna 200A, 200B.

In an embodiment of the invention, the base transceiver station comprises an interface signal processing unit 222 connected to the at least one active antenna 200A, 200B and the interface 236 for processing signals 212A, 212B, 210A, 210B transmitted between the at least one active antenna 200A, 200B and the interface 236.

In an embodiment, the base transceiver station 250 comprises a control unit 240 for controlling the operation of the base transceiver station 250. The control unit 240 may be connected to the base band adapter 238 in order to transmit and receive control signals to the active antennas 200A, 200B.

In an embodiment of the invention, the plurality of active antennas 200A, 200B is configured to provide at least one of the following: a desired output power level, a desired sensitivity, a desired antenna radiation pattern 116, 124, 130, by controlling signal characteristics of the active antenna 200A, 200B. The invention enables separate power and phase control of the active antennas 200A, 200B. The radiation pattern may be realized by using one or more active antennas 200A, 200B, 340 by controlling the relative phases and possibly the amplitudes of the radio frequency signals 204A, 204B, 322A, 322B.

In an embodiment, the interface 236 in configured to provide an optical link between the local unit 234 and the at least one active antenna 200A, 200B. The optical link may be implemented by using an optical wave-guide 246 for optically connecting the base band adapter 238 and the antenna adapter 214. The optical wave-guide 246 may be, for example, an optical fibre or a plurality of optical fibres.

In an embodiment of the invention, the active antenna 200A, 200B is configured to support at least two radio systems, and the base transceiver station is configured to support at least two radio systems. The active antenna configuration may be implemented according to the first aspect of the invention. The structure and operation of the local unit 234 supporting more than one radio systems is known to a person skilled in the art.

The antenna arrangement and the base transceiver station according to the invention enable a single type of an active antenna 200A, 200B 340 to be used as a building block in implementing various types of cells shown in Figure 1. In a pico-cell 130 application, the active antenna 200A, 200B, 340 may be composed of the antenna element 202A, 202B, 300 and a basic transceiver circuit with possibly no need for an amplifier unit 226A, 226B, 312. In a micro-cell 124 application, an amplifier unit 226A, 226B, 312 may be needed in the transceiver circuit.

A macro-cell 116 application may be implemented by using a plurality of antenna elements 200A, 200B, 340 similar to those used in the micro-cell application. In a two-dimensional antenna array, an amplifier unit 226A, 226B, 312 may not be necessary, since the large number of active antennas 200A, 200B, 340 may provide the required power without further amplification.

The structure of the active antenna 200A, 200B, 340 and the modular structure of the antenna arrangement enable cost-effective technology to be used in implementing radio frequency parts in a base transceiver station. The costs are reduced by high production volumes resulting low cost per one active antenna 200A, 200B, 340. Furthermore, the invention enables signal processing and radio frequency tasks to be distributed over the antenna arrangement such that the technical requirements set for an individual active antenna 200A, 200B, 340 are comparable with those of the mobile phone technology. The reduction in the technical requirements enables commercially available chipsets to be used in implementing the active antennas 200A, 200B, 340.

## Claims

1. An antenna arrangement (216) of a base transceiver station (250) of a cellular telecommunication system comprising at least one active antenna (200A, 200B) for performing conversion between a low-frequency digital signal (212A, 212B) and a radio frequency electromagnetic field (206A, 206B), the at least one active antenna (200A, 200B) comprising an antenna element (202A, 202B) for performing conversion between a radio frequency signal (204A, 204B) and the radio frequency electromagnetic field (206A, 206B), wherein the at least one active antenna (200A, 200B) further comprises a transceiver (208A, 208B) coupled with the antenna element (202A, 202B), for performing conversion between the low-frequency digital signal (212A, 212B) and the radio frequency signal (204A, 204B), **characterized in that** the antenna element (202A, 202B) and the transceiver (208A, 208B) are integrated into a common electromechanical structure (504), wherein the common electromechanical structure (504) comprises a printed board or an integrated circuit.

2. An antenna arrangement as claimed in claim 1, **characterized in that** the transceiver (208A, 208B) comprises a radio modem (230A, 230B) for performing frequency conversion between the low-frequency digital signal (212A, 212B) and the radio frequency signal (204A, 204B).

3. An antenna arrangement as claimed in claim 1, **characterized in that** the transceiver (208A, 208B) comprises an amplifier unit (226A, 226B) connected to the antenna element (202A, 202B), for amplifying the radio frequency signal (204A, 204B).

4. An antenna arrangement as claimed in claim 1, **characterized in that** the transceiver (208A, 208B) comprises a filter unit (224A, 224B) connected to the antenna element (202A, 202B), for limiting the frequency spectrum of the radio frequency signal (202A, 202B).

5. An antenna arrangement as claimed in claim 1, **characterized in that** the transceiver (208A, 208B) comprises a signal processing unit (232A, 232B) for processing the low-frequency digital signal (212A, 212B).

6. An antenna arrangement as claimed in claim 1, **characterized in that** the antenna arrangement further comprises an antenna adapter (214) connected to the at least one active antenna (200A, 200B), for providing a digital link for the at least one active antenna (200A, 200B).

7. An antenna arrangement as claimed in claim 6, **characterized in that** the antenna arrangement further comprises an interface signal processing unit (222) connected to the at least one active antenna (200A, 200B) and the antenna adapter (214), for processing signals (212A, 212B, 210A, 210B) transmitted between the at least one active antenna (200A, 200B) and the antenna adapter (214).

8. An antenna arrangement as claimed in claim 7 **characterized in that** the transceiver (208A, 208B) comprises a signal processing unit (232A, 232B) for processing the low-frequency digital signal (212A, 212B) and **in that** the interface signal processing unit (222) performs tasks including: setting phase and power for each antenna element (202A, 202B, 300) according to the desired radiation pattern; distributing phase setting data to each signal processing unit (232A, 232B); distributing operation and maintenance commands to the active antennas (200A, 200B, 340); reducing n data streams coming from the individual active antennas (200A, 200B, 300) into one common data stream; phase tracking; and noise and interference cancellation.

9. An antenna arrangement as claimed in claim 1, **characterized in that** the at least one active antenna further comprises a control unit (242A, 242B) connected to the transceiver (208A, 208B), for controlling the at least one active antenna (200A, 200B).

10. An antenna arrangement as claimed in claim 9, **characterized in that** the antenna arrangement further comprises an antenna adapter (214) connected to the at least one active antenna (200A, 200B), for providing a digital link for the at least one active antenna (200A, 200B) and **in that** the control unit (242A, 242B) is connected to the antenna adapter (214) in order to transmit control information (244A, 244B) between the control unit (242A, 242B) and the antenna adapter (214).

11. An antenna arrangement as claimed in claim 1, **characterized in that** the at least one active antenna (200A, 200B) is configured to support at least two radio systems.

12. A base transceiver station of a cellular telecommunication system, comprising an antenna arrangement of claim 1, and a local unit (234) for digital signal processing, wherein the local unit (234) is connected to a network of the cellular telecommunication system.

13. A base transceiver station as claimed in claim 12, **characterized in that** the base transceiver station further comprises an interface (236) connected to the local unit (234) and at least one active antenna (200A, 200B), for providing a digital link between the local unit (234) and the at least one active antenna (200A, 200B).

14. A base transceiver station as claimed in claim 13, **characterized in that** the interface (236) is configured to transmit signal characteristics of the radio frequency signal (204A, 204B) between the local unit (234) and the at least one active antenna (200A, 200B).

15. A base transceiver station as claimed in claim 13, **characterized in that** the interface (236) is configured to transmit control information between the local unit (234) and the at least one active antenna (200A, 200B).

16. A base transceiver station as claimed in claim 13, **characterized in that** the interface (236) is configured to provide an optical link between the local unit (234) and the at least one active antenna (200A, 200B).

17. A base transceiver station as claimed in claim 13, **characterized in that** the base transceiver station further comprises an interface signal processing unit (222) connected to the at least one active antenna (200A, 200B) and the interface (236), for processing signals (212A, 212B, 210A, 210B) transmitted between the at least one active antenna (200A, 200B) and the interface (236).

18. A base transceiver station as claimed in claim 17, **characterized in that** the interface signal processing unit (222) performs tasks including: setting phase and power for each antenna element (202A, 202B, 300) according to the desired radiation pattern; distributing phase setting data to each signal processing unit (232A, 232B, 318); distributing operation and maintenance commands to the active antennas (200A, 200B, 340); reducing n data streams coming from the individual active antennas (200A, 200B, 300) into one common data stream; phase tracking; and noise and interference cancellation.

19. A base transceiver station as claimed in claim 16, **characterized in that** the at least one active antenna (200A, 200B) is configured to support at least two radio systems; and the local unit (234) is configured to support at least two radio systems.

## Patentansprüche

1. Antennenanordnung (216) einer Sender/Empfänger-Basisstation (250) eines zellularen Telekommunikationssystems, das mindestens eine aktive Antenne (200A, 200B) zum Durchführen einer Umwandlung zwischen einem Niederfrequenz-Digitalsignal (212A, 212B) und einem elektromagnetischen Hochfrequenzfeld (206A, 206B) umfasst, wobei die mindestens eine aktive Antenne (200A, 200B) ein Antennenelement (202A, 202B) zum Durchführen einer Umwandlung zwischen einem Hochfrequenzsignal (204A, 204B) und dem elektromagnetischen Hochfrequenzfeld (206A, 206B) umfasst, wobei die mindestens eine aktive Antenne (200A, 200B) ferner einen Sender/Empfänger (208A, 208B) umfasst, der mit dem Antennenelement (202A, 202B) zwecks Durchführens einer Umwandlung zwischen dem Niederfrequenz-Digitalsignal (212A, 212B) und dem Hochfrequenzsignal (204A, 204B) verbunden ist, **dadurch gekennzeichnet, dass** das Antennenelement (202A, 202B) und der Sender/Empfänger (208A, 208B) in eine gemeinsame elektromechanische Struktur (504) integriert sind, wobei die gemeinsame elektromechanische Struktur (504) eine gedruckte Schaltung oder eine integrierte Schaltung umfasst.

2. Antennenanordnung nach Anspruch 1, **dadurch gekennzeichnet, dass** der Sender/Empfänger (208A, 208B) ein Hochfrequenzmodem (230A, 230B) zum Durchführen von Frequenzumwandlung zwischen dem Niederfrequenz-Digitalsignal (212A, 212B) und dem Hochfrequenzsignal (204A, 204B) umfasst.

3. Antennenanordnung nach Anspruch 1, **dadurch gekennzeichnet, dass** der Sender/Empfänger (208A, 208B) eine Verstärkereinheit (226A, 226B) umfasst, die mit dem Antennenelement (202A, 202B) zwecks Verstärken des Hochfrequenzsignals (204A, 204B) verbunden ist.

4. Antennenanordnung nach Anspruch 1, **dadurch gekennzeichnet, dass** der Sender/Empfänger (208A, 208B) eine Filtereinheit (224A, 224B) umfasst, die mit dem Antennenelement (202A, 202B) zwecks Begrenzen des Frequenzspektrums des Hochfrequenzsignals (204A, 204B) verbunden ist.

5. Antennenanordnung nach Anspruch 1, **dadurch gekennzeichnet, dass** der Sender/Empfänger (208A, 208B) eine Signalverarbeitungseinheit (232A, 232B) zum Verarbeiten des Niederfrequenz-Digitalsignals (212A, 212B) umfasst.

6. Antennenanordnung nach Anspruch 1, **dadurch gekennzeichnet, dass** die Antennenanordnung ferner einen Antennenadapter (214) umfasst, der mit der mindestens einen aktiven Antenne (200A, 200B) zwecks Bereitstellen einer digitalen Verbindung für die mindestens eine aktive Antenne (200A, 200B) verbunden ist.

7. Antennenanordnung nach Anspruch 6, **dadurch gekennzeichnet, dass** die Antennenanordnung ferner eine Schnittstellensignalverarbeitungseinheit (222) umfasst, die mit der mindestens einen aktiven Antenne (200A, 200B) und dem Antennenadapter (214) verbunden ist, um Signale (212A, 212B, 210A, 210B) zu verarbeiten, die zwischen der mindestens einen aktiven Antenne (200A, 200B) und dem Antennenadapter (214) übertragen werden.

8. Antennenanordnung nach Anspruch 7, **dadurch gekennzeichnet, dass** der Sender/Empfänger (208A, 208B) eine Signalverarbeitungseinheit (232A, 232B) zum Verarbeiten des Niederfrequenz-Digitalsignals (212A, 212B) umfasst und dass die Schnittstellensignalverarbeitungseinheit (222) Aufgaben einschließlich der folgenden durchführt: Einstellen von Phase und Leistung für jedes Antennenelement (202A, 202B, 300) gemäß dem gewünschten Strahlungsmuster; Verteilen von Phaseneinstelldaten an jede Signalverarbeitungseinheit (232A, 232B); Verteilen von Betriebs- und Wartungsbefehlen an die aktiven Antennen (200A, 200B, 340); Reduzieren von n von den einzelnen aktiven Antennen (200A, 200B, 300) kommenden Datenströmen zu einem gemeinsamen Datenstrom; Phasenverfolgen; und Rausch- und Störungsauslöschung.

9. Antennenanordnung nach Anspruch 1, **dadurch gekennzeichnet, dass** die mindestens eine aktive Antenne (200A, 200B) ferner eine Steuereinheit (242A, 242B), die mit dem Sender/Empfänger (208A, 208B) verbunden ist, zwecks Steuern der mindestens einen aktiven Antenne (200A, 200B), umfasst.

10. Antennenanordnung nach Anspruch 9, **dadurch gekennzeichnet, dass** die Antennenanordnung ferner einen Antennenadapter (214) umfasst, der mit der mindestens einen aktiven Antenne (200A, 200B) zwecks Bereitstellen einer digitalen Verbindung für die mindestens eine aktive Antenne (200A, 200B) verbunden ist, und dass die Steuereinheit (242A, 242B) mit dem Antennenadapter (214) verbunden ist, um Steuerinformationen (244A, 244B) zwischen der Steuereinheit (242A, 242B) und dem Antennenadapter (214) zu übertragen.

11. Antennenanordnung nach Anspruch 1, **dadurch gekennzeichnet, dass** die mindestens eine aktive Antenne (200A, 200B) dafür ausgelegt ist, mindestens zwei Funksysteme zu unterstützen.

12. Sender/Empfänger-Basisstation eines zellularen Telekommunikationssystems, das eine Antennenanordnung nach Anspruch 1 und eine lokale Einheit (234) für digitale Signalverarbeitung umfasst, wobei die lokale Einheit (234) mit einem Netz des zellularen Telekommunikationssystems verbunden ist.

13. Sender/Empfänger-Basisstation nach Anspruch 12, **dadurch gekennzeichnet, dass** die Sender/Empfänger-Basisstation ferner eine Schnittstelle (236) umfasst, die mit der lokalen Einheit (234) und mindestens einer aktiven Antenne (200A, 200B) zum Bereitstellen einer digitalen Verbindung zwischen der lokalen Einheit (234) und der mindestens einen aktiven Antenne (200A, 200B) verbunden ist.

14. Sender/Empfänger-Basisstation nach Anspruch 13, **dadurch gekennzeichnet, dass** die Schnittstelle (236) dafür ausgelegt ist, Signaleigenschaften des Hochfrequenzsignals (204A, 204B) zwischen der lokalen Einheit (234) und der mindestens einen aktiven Antenne (200A, 200B) zu übertragen.

15. Sender/Empfänger-Basisstation nach Anspruch 13, **dadurch gekennzeichnet, dass** die Schnittstelle (236) dafür ausgelegt ist, Steuerinformationen zwischen der lokalen Einheit (234) und der mindestens einen aktiven Antenne (200A, 200B) zu übertragen.

16. Sender/Empfänger-Basisstation nach Anspruch 13, **dadurch gekennzeichnet, dass** die Schnittstelle (236) dafür ausgelegt ist, eine optische Verbindung zwischen der lokalen Einheit (234) und der mindestens einen aktiven Antenne (200A, 200B) bereitzustellen.

17. Sender/Empfänger-Basisstation nach Anspruch 13, **dadurch gekennzeichnet, dass** die Sender/Empfänger-Basisstation ferner eine Schnittstellensignalverarbeitungseinheit (222) umfasst, die mit der mindestens einen aktiven Antenne (200A, 200B) und der Schnittstelle (236) zwecks Verarbeitung von Signalen (212A, 212B, 210A, 210B), die zwischen der mindestens einen Antenne (200A, 200B) und der Schnittstelle (236) übertragen werden, verbunden ist.

18. Sender/Empfänger-Basisstation nach Anspruch 17, **dadurch gekennzeichnet, dass** die Schnittstellensignalverarbeitungseinheit (222) Aufgaben einschließlich der folgenden durchführt: Einstellen von Phase und Leistung für jedes Antennenelement (202A, 202B, 300) gemäß dem gewünschten Strahlungsmuster; Verteilen von Phaseneinstelldaten an jede Signalverarbeitungseinheit (232A, 232B, 318); Verteilen von Betriebs- und Wartungsbefehlen an die aktiven Antennen (200A, 200B, 340); Reduzieren von n von den einzelnen aktiven Antennen (200A, 200B, 300) kommenden Datenströmen zu einem gemeinsamen Datenstrom; Phasenverfolgen; und Rausch- und Störungsauslöschung.

19. Sender/Empfänger-Basisstation nach Anspruch 16, **dadurch gekennzeichnet, dass** die mindestens eine aktive Antenne (200A, 200B) dafür ausgelegt ist, mindestens zwei Funksysteme zu unterstützen; und die lokale Einheit (234) dafür ausgelegt ist, mindestens zwei Funksysteme zu unterstützen.

## Revendications

1. Agencement d'antenne (216) d'une station d'émetteur-récepteur de base (250) d'un système de télécommunication cellulaire comprenant au moins une antenne active (200A, 200B) pour effectuer une conversion entre un signal numérique basse fréquence (212A, 212B) et un champ électromagnétique radiofréquence (206A, 206B), ladite au moins une antenne active (200A, 200B) comprenant un élément d'antenne (202A, 202B) pour effectuer une conversion entre un signal radiofréquence (204A, 204B) et le champ électromagnétique radiofréquence (206A, 206B), où ladite au moins une antenne active (200A, 200B) comprend en outre un émetteur-récepteur (208A, 208B) couplé à l'élément d'antenne (202A, 202B) pour effectuer une conversion entre le signal numérique basse fréquence (212A, 212B) et le signal radiofréquence (204A, 204B), **caractérisé en ce que** l'élément d'antenne (202A, 202B) et l'émetteur-récepteur (208A, 208B) sont intégrés dans une structure électromécanique commune (504), où la structure électromécanique commune (504) comprend une carte de circuit imprimée ou un circuit intégré.

2. Agencement d'antenne tel que revendiqué dans la revendication 1, **caractérisé en ce que** l'émetteur-récepteur (208A, 208B) comprend un modem radio (230A, 230B) pour effectuer une conversion de fréquence entre le signal numérique basse fréquence (212A, 212B) et le signal radiofréquence (204A, 204B).

3. Agencement d'antenne tel que revendiqué dans la revendication 1, **caractérisé en ce que** l'émetteur-récepteur (208A, 208B) comprend une unité d'amplificateur (226A, 226B) connectée à l'élément d'antenne (202A, 202B) pour amplifier le signal radiofréquence (204A, 204B).

4. Agencement d'antenne tel que revendiqué dans la revendication 1, **caractérisé en ce que** l'émetteur-récepteur (208A, 208B) comprend une unité de filtre (224A, 224B) connectée à l'élément d'antenne (202A, 202B), pour limiter le spectre de fréquences du signal radiofréquence (202A, 202B).

5. Agencement d'antenne tel que revendiqué dans la revendication 1, **caractérisé en ce que** l'émetteur-récepteur (208A, 208B) comprend une unité de traitement de signal (232A, 232B) pour traiter le signal numérique basse fréquence (212A, 212B).

6. Agencement d'antenne tel que revendiqué dans la revendication 1, **caractérisé en ce que** l'agencement d'antenne comprend en outre un adaptateur d'antenne (214) connecté à l'au moins une antenne active (200A, 200B), pour fournir une liaison numérique pour l'au moins une antenne active (200A, 200B).

7. Agencement d'antenne tel que revendiqué dans la revendication 6, **caractérisé en ce que** l'agencement d'antenne comprend en outre une unité de traitement de signal d'interface (222) connectée à l'au moins une antenne active (200A, 200B) et à l'adaptateur d'antenne (214), pour traiter des signaux (212A, 212B, 210A, 210B) transmis entre l'au moins une antenne active (200A, 200B) et l'adaptateur d'antenne (214).

8. Agencement d'antenne tel que revendiqué dans la revendication 7, **caractérisé en ce que** l'émetteur-récepteur (208A, 208B) comprend une unité de traitement de signal (232A, 232B) pour traiter le signal numérique basse fréquence (212A, 212B) et **en ce que** l'unité de traitement de signal d'interface (222) exécute des tâches telles que : définir la phase et la puissance pour chaque élément d'antenne (202A, 202B, 300) selon le diagramme de rayonnement souhaité ; distribuer des données de définition de phase à chaque unité de traitement de signal (232A, 232B) ; distribuer des commandes de fonctionnement et de maintenance aux antennes actives (200A, 200B, 340) ; réduire n flux de données provenant des antennes actives individuelles (200A, 200B, 300) en un flux de données commun ; suivre la phase ; et annuler le bruit et les interférences.

9. Agencement d'antenne tel que revendiqué dans la revendication 1, **caractérisé en ce que** l'au moins une antenne active comprend en outre une unité de commande (242A, 242B) connectée à l'émetteur-récepteur (208A, 208B) pour commander l'au moins une antenne active (200A, 200B).

10. Agencement d'antenne tel que revendiqué dans la revendication 9, **caractérisé en ce que** l'agencement d'antenne comprend en outre un adaptateur d'antenne (214) connecté à l'au moins une antenne active (200A, 200B) pour fournir une liaison numérique pour l'au moins une antenne active (200A, 200B) et **en ce que** l'unité de commande (242A, 242B) est connectée à l'adaptateur d'antenne (214) de manière à transmettre des informations de commande (244A, 244B) entre l'unité de commande (242A, 242B) et l'adaptateur d'antenne (214).

11. Agencement d'antenne tel que revendiqué dans la revendication 1, **caractérisé en ce que** l'au moins une antenne active (200A, 200B) est configurée pour supporter au moins deux systèmes de radiocommunication.

12. Station d'émetteur-récepteur de base d'un système de télécommunication cellulaire, comprenant un agencement d'antenne selon la revendication 1 et une unité locale (234) destinée au traitement des signaux numériques, où l'unité locale (234) est connectée à un réseau du système de télécommunication cellulaire.

13. Station d'émetteur-récepteur de base telle que revendiquée dans la revendication 12, **caractérisée en ce que** la station d'émetteur-récepteur de base comprend en outre une interface (236) connectée à l'unité locale (234) et à au moins une antenne active (200A, 200B), pour fournir une liaison numérique entre l'unité locale (234) et l'au moins une antenne active (200A, 200B).

14. Station d'émetteur-récepteur de base telle que revendiquée dans la revendication 13, **caractérisée en ce que** l'interface (236) est configurée pour transmettre des caractéristiques de signal du signal radiofréquence (204A, 204B) entre l'unité locale (234) et l'au moins une antenne active (200A, 200B).

15. Station d'émetteur-récepteur de base telle que revendiquée dans la revendication 13, **caractérisée en ce que** l'interface (236) est configurée pour transmettre des informations de commande entre l'unité locale (234) et l'au moins une antenne active (200A, 200B).

16. Station d'émetteur-récepteur de base telle que revendiquée dans la revendication 13, **caractérisée en ce que** l'interface (236) est configurée pour fournir une liaison optique entre l'unité locale (234) et l'au moins une antenne active (200A, 200B).

17. Station d'émetteur-récepteur de base telle que revendiquée dans la revendication 13, **caractérisée en ce que** la station d'émetteur-récepteur de base comprend en outre une unité de traitement de signal d'interface (222) connectée à l'au moins une antenne active (200A, 200B) et à l'interface (236), pour traiter des signaux (212A, 212B, 210A, 210B) transmis entre l'au moins une antenne active (200A, 200B) et l'interface (236).

18. Station d'émetteur-récepteur de base telle que revendiquée dans la revendication 17, **caractérisée en ce que** l'unité de traitement de signal d'interface (222) exécute des tâches telles que : définir la phase et la puissance pour chaque élément d'antenne (202A, 202B, 300) selon le diagramme de rayonnement souhaité ; distribuer des données de définition de phase à chaque unité de traitement de signal (232A, 232B, 318) ; distribuer des commandes de fonctionnement et de maintenance aux antennes actives (200A, 200B, 340) ; réduire n flux de données provenant des antennes actives individuelles (200A, 200B, 300) en un flux de données commun ; suivre la phase ; et annuler le bruit et les interférences.

19. Station d'émetteur-récepteur de base telle que revendiquée dans la revendication 16, **caractérisée en ce qu'**au moins une antenne active (200A, 200B) est configurée pour supporter au moins deux systèmes de radiocommunication ; et l'unité locale (234) est configurée pour supporter au moins deux systèmes de radiocommunication.
